# EUROPEAN PATENT APPLICATION

(11) **EP 2 424 327 A1**
(43) Date of publication of application: **29.02.2012**
(21) Application number: 10008941.6
(22) Date of filing: 27.08.2010
(51) Int. Cl.: H04W 88/10

(54) **Method, public land mobile network and network entity for providing wireless backhaul link**

(71) Applicant: Deutsche Telekom AG, 53113 Bonn (DE)
(72) Inventor: Klein, Ole, 53173 Bonn (DE)
(74) Representative: Schwöbel, Thilo K.

(57) **Abstract**

The present invention relates to a method for providing a wireless backhaul communication link between a network entity and a further network entity of a public land mobile network, wherein the network entity comprises a first wireless interface and a second wireless interface, and wherein the further network entity comprises a third wireless interface and a fourth wireless interface, wherein the method comprises the steps of:
-- establishing a first wireless communication link between the first wireless interface and the third wireless interface, and
-- establishing a second wireless communication link between the second wireless interface and the fourth wireless interface,

wherein the first wireless communication link uses a licensed radio frequency spectrum, wherein the second wireless communication link uses an unlicensed radio frequency spectrum, and wherein either the first communication link or the second communication link is used for realizing a wireless backhaul communication link between the network entity and the further network entity dependent upon the current network load at the first or further network entity (30, 40) and/or dependent on the Quality-of-Service requirements of a requested communication service. The present invention further relates to a public land mobile network, to a network entity, to a system comprising a network entity and a further network entity, and to a program comprising a computer readable program code.

## Description

### BACKGROUND

The present invention relates to a method, a public land mobile network, a system and a network entity for providing a wireless backhaul communication link between different network nodes, especially between an access network node and a core network node. According to the present invention, an efficient use of wireless backhaul is possible.

Wireless backhauling to connect radio network nodes with fixed infrastructure is a common means to be able to rapidly and cost efficiently deploy new radio network nodes. It will even get more interesting when operators will deploy more pico/micro nodes in the future as a means to inject capacity into their networks.

Legacy wireless backhaul technology is based on various techniques but either it is based on air interfaces using licensed radio frequency spectrum, or it is based on air interfaces using unlicensed radio frequency spectrum.

This limits the possibilities of using wireless backhauling as the use of unlicensed radio frequency spectrum usually implies that no Quality-of-Service level can be guaranteed and the use of licensed radio frequency spectrum is usually more restricted and less cost effective.

### SUMMARY

An object of the present invention is to overcome - at least partly - the limitations of the current state of the art, and to provide a more effective possibility of wireless backhauling between different network entity such as NodeBs/eNodeBs and a gateway of the core network, or also between two NodeBs/eNodeBs.

The object of the present invention is achieved by a method for providing a wireless backhaul communication link between a network entity and a further network entity of a public land mobile network, wherein the network entity comprises a first wireless interface and a second wireless interface, and wherein the further network entity comprises a third wireless interface and a fourth wireless interface, wherein the method comprises the steps of:
-- establishing a first wireless communication link between the first wireless interface and the third wireless interface, and
-- establishing a second wireless communication link between the second wireless interface and the fourth wireless interface,
wherein the first wireless communication link uses a licensed radio frequency spectrum, wherein the second wireless communication link uses an unlicensed radio frequency spectrum, and wherein either the first communication link or the second communication link is used for realizing a wireless backhaul communication link between the network entity and the further network entity dependent upon the current network load at the first or further network entity and/or dependent on the Quality-of-Service requirements of a requested communication service.

According to the present invention, it is advantageously possible to use appropriately a licensed or an unlicensed radio frequency spectrum dependent on the communication situation, i.e. in case that a requested communication service requires a certain Quality-of-Service level (e.g. equivalent to the Third Generation Partnership Project (3GPP) definition of Quality-of-Service levels) that cannot be realized or achieved by using an unlicensed radio frequency spectrum, then a licensed radio frequency spectrum is used, and in another situation, e.g. in a situation that the network experiences a high network load (usually on the licensed part of the radio frequency spectrum), it is advantageously possible according to the present invention that the unlicensed radio frequency spectrum is used for backhauling purposes in order to be able to use the licensed radio frequency spectrum part for user traffic, e.g. with mobile stations in the radio network cell served by the network entity in question. According to still a further possible situation, the licensed radio frequency spectrum is always used and in case of increased backhaul transmission capacity needs, the unlicensed radio frequency spectrum is used additionally.

In the context of the present invention, the term licensed part of the radio frequency spectrum refers to any radio frequency spectrum part for which the operator of the network, especially a public land mobile network, has acquired licenses.

In the context of the present invention, the term unlicensed part of the radio frequency spectrum refers to any radio frequency spectrum part for which the operator does not need a license for being allowed to use this radio frequency spectrum part. Usually, as the use of the unlicensed part of the radio frequency spectrum is not restricted to the operator (and neither to any other user), situations of interference might be more likely for the unlicensed part of the radio frequency spectrum, and hence the use of the unlicensed spectrum part is less predictable.

In the context of the present invention, the terms "first wireless interface", "second wireless interface", "third wireless interface" and "fourth wireless interface" does not necessarily means that there are different physical parts allowing for such different interface capabilities but it is possible that one physical antenna equipment covers or provides the possibility to use more than one "wireless interface" in the sense that an antenna arrangement providing the physical support for providing the first wireless interface, e.g. , operates in the radio frequency spectrum ranges associated with the Global System of Mobile Communication (GSM) or with the Universal Mobile Telecommunication System (UMTS) or with LTE (Long Term Evolution radio communication technology) (i.e. in a licensed part of the radio frequency spectrum) and that that same antenna arrangement is also able to be operated in another radio frequency spectrum range associated, e.g., with Wireless LAN.

According to the present invention, it is preferred that the decision for using either the first communication link or the second communication link is based on configurable rules.

For the use of both the first communication link (i.e. using the licensed radio frequency spectrum) and the second communication link (i.e. using the unlicensed radio frequency spectrum), any radio frequency communication technology can be used, e.g. LTE (Long Term Evolution radio communication technology) or WLAN or WWAN standards (Wireless Local Area Network standard or Wireless Wide Area Network standard).

Thereby, it is advantageously possible to flexibly and appropriately adjust the use of either the licensed radio frequency spectrum or the unlicensed radio frequency spectrum in different situations regarding the requirements of a specific required communication service and regarding the current network capacity limitations.

According to the present invention, it is furthermore preferred that for a specific communication need involving data to be transmitted from the network entity to the further network entity, it is decided to use either the first communication link or the second communication link.

Thereby, it is advantageously possible to decide to use either the first communication link or the second communication link in a flexible manner adapted to the specific communication need.

It is furthermore preferred according to the present invention that the data transmitted from the network entity to the further network entity are merged by the further network entity.

Thereby, it is easily and effectively possible to provide a solution such that a transparent communication between the network entity and the further network entity is possible and that further network nodes do not recognise whether a specific communication (e.g. a specific packet in a packet data communication situation) is transported via the first communication link or via the second communication link.

The present invention further relates to a public land mobile network providing a wireless backhaul communication link between a network entity and a further network entity of the public land mobile network, wherein the network entity comprises a first wireless interface and a second wireless interface, and wherein the further network entity comprises a third wireless interface and a fourth wireless interface, wherein a first wireless communication link is established between the first wireless interface and the third wireless interface, and wherein a second wireless communication link is established between the second wireless interface and the fourth wireless interface, wherein the first wireless communication link is based on the use of a licensed radio frequency spectrum, wherein the second wireless communication link is based on the use of an unlicensed radio frequency spectrum, and wherein either the first communication link or the second communication link is used for realizing a wireless backhaul communication link between the network entity and the further network entity dependent upon the current network load at the first or further network entity and/or dependent on the Quality-of-Service requirements of a requested communication service.

Thereby, it is advantageously possible to realise a flexible and cost-effective manner of transporting data between two network entity, especially for backhauling purposes.

According to the present invention, it is furthermore preferred that the network entity comprises a decision function, wherein the decision function is provided such that for a specific communication need involving data to be transmitted from the network entity to the further network entity, a decision to use either the first communication link or the second communication link is provided by the decision function.

Thereby, it is advantageously possible to flexibly and appropriately adjust the use of either the licensed radio frequency spectrum or the unlicensed radio frequency spectrum in different situations regarding the requirements of a specific required communication services and regarding the current network capacity limitations.

The invention furthermore relates to a network entity providing a wireless backhaul communication link between the network entity and a further network entity of a public land mobile network, wherein the network entity comprises a first wireless interface and a second wireless interface, and wherein the further network entity comprises a third wireless interface and a fourth wireless interface, wherein a first wireless communication link is established between the first wireless interface and the third wireless interface, and wherein a second wireless communication link is established between the second wireless interface and the fourth wireless interface, wherein the first wireless communication link is based on the use of a licensed radio frequency spectrum, wherein the second wireless communication link is based on the use of an unlicensed radio frequency spectrum, and wherein either the first communication link or the second communication link is used for realizing a wireless backhaul communication link between the network entity and the further network entity dependent upon the current network load at the first or further network entity and/or dependent on the Quality-of-Service requirements of a requested communication service.

According to the present invention, it is furthermore preferred that the network entity comprises a decision function, wherein the decision function is provided such that for a specific communication need involving data transmitted from the network entity to the further network entity, a decision to use either the first communication link or the second communication link is provided by the decision function.

Thereby, it is advantageously possible to provide a decision whether a specific communication event should be routed via the first communication link or via the second communication link. According to the present invention, the decision function can either be implemented within the network entity, e.g. as a software or hardware module comprising means to control the use of the first and the second communication link. Alternatively to such a realization of the present invention, it is also possible according to the present invention that the decision function is realized as an entity (being part of the network entity) but being (physically) apart from, e.g. the NodeB-entity or from a base station related entity. In such a situation, the classical NodeB or base station related entity together with such a decision entity is regarded as the network entity according to the present invention.

According to the present invention, it is furthermore preferred that the network entity comprises a merging function, wherein the merging function is provided such that the data transmitted from the further network entity to the network entity via the first communication link and via the second communication link are merged by the merging function.

Thereby, it is advantageously possible to provide the merging functionality for incoming communication events (i.e. incoming to the network entity, e.g. from the further network entity), i.e. for such incoming communication events the further processing of the received data does not depend whether the data have been transmitted via the first communication link or via the second communication link (i.e. the use of the first communication link or of.the second communication link is transparent to such a further processing).

Furthermore, the present invention relates to a system comprising a network entity and a further network entity and providing a wireless backhaul communication link between the network entity and the further network entity, wherein the network entity comprises a first wireless interface and a second wireless interface, and wherein the further network entity comprises a third wireless interface and a fourth wireless interface, wherein a first wireless communication link is established between the first wireless interface and the third wireless interface, and wherein a second wireless communication link is established between the second wireless interface and the fourth wireless interface, wherein the first wireless communication link is based on the use of a licensed radio frequency spectrum, wherein the second wireless communication link is based on the use of an unlicensed radio frequency spectrum, and wherein either the first communication link or the second communication link is used for realizing a wireless backhaul communication link between the network entity and the further network entity dependent upon the current network load at the first or further network entity and/or dependent on the Quality-of-Service requirements of a requested communication service.

Such a system has the advantage to realise a flexible and cost-effective manner of transporting data between two network entities, especially for backhauling purposes.

Additionally, the present invention relates to a program comprising a computer readable program code for executing an inventive method or for configuring or controlling an inventive public land mobile network or an inventive network entity or an inventive system comprising a network entity and a further network entity.

### BRIEF DESCRIPTION OF THE DRAWINGS

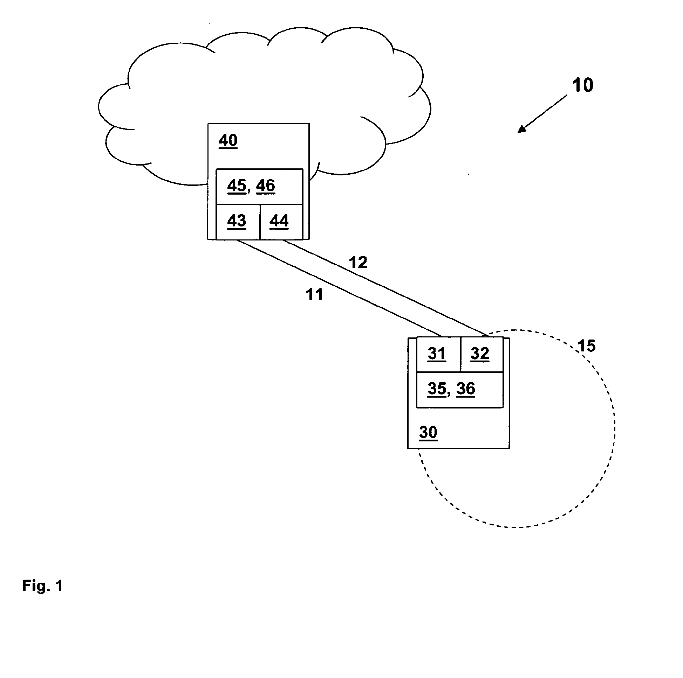

Figure 1 schematically illustrates a cellular public land mobile network comprising at least one radio cell with a network entity according to the present invention.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

In Figure 1, a cellular public land mobile network 10 is schematically represented. The public land mobile network 10 comprises a plurality of cells, one of which is represented by means of a dashed circle and designated by reference sign 15. The cell 15 also comprises a base station means (i.e. a fixed device such as an eNodeB or the like) having at least one antenna means such that radio coverage within the cell 15 is provided. The base station means is an example for a network entity 30 according to the present invention. A further network entity 40 is, e.g., part of the core network of the public land mobile network 10. The network entity 30 and the further network entity 40 can be any network entities within the public land mobile network 10, i.e. either within solely the access network of the public land mobile network or solely within the core network of the public land mobile network or between the access network and the core network of the public land mobile network 10. Only for the sake of representing one example of the possible applications of the present invention, the realization of the network entity 30 as part of the access network (i.e. being a base station or NodeB (eNodeB) and the further network entity 40 as part of the core network (i.e. being a gateway for wireless backhaul of the core network) is schematically shown in Figure 1.

According to the present invention, the network entity 30 comprises a first wireless (or air) interface 31 and a second wireless (or air) interface 32. Furthermore, the further network entity 40 comprises a third wireless (or air) interface 43 and a fourth wireless (or air) interface 44. According to the present invention, a first communication link 11 is established between a first wireless interface 31 of the network entity 30 and the third wireless interface 43 of the further network entity 40, and a second communication link 12 is established between a second wireless interface 32 of the network entity 30 and the fourth wireless interface 44 of the further network entity 40. The first communication link 11 uses a licensed spectrum part of the radio frequency spectrum and the second communication link 12 uses an unlicensed spectrum part of the radio frequency spectrum.

The network entity 30 further comprises a decision function 35 able to decide to use either the first communication link 11 or the second communication link 12 with regard to a specific communication need in the direction from the network entity 30 towards the further network entity 40. Furthermore, the network entity 30 preferably further comprises a merging function 36 able to merge transmitted data from either the first communication link 11 or the second communication link 12 with regard to a communication occurred in the direction from the further network entity 40 towards the network entity 30. Analogously, it is preferred according to the present invention that the further network entity 40 further comprises a decision function 45 able to decide to use either the first communication link 11 or the second communication link 12 with regard to a specific communication need in the direction from the further network entity 40 towards the network entity 30, and it is preferred that the further network entity 40 comprises a merging function 46 able to merge transmitted data from either the first communication link 11 or the second communication link 12 with regard to a communication occurred in the direction from the network entity 30 towards the further network entity 40.

## Claims

1. Method for providing a wireless backhaul communication link between a network entity (30) and a further network entity (40) of a public land mobile network (10), wherein the network entity (30) comprises a first wireless interface (31) and a second wireless interface (32), and wherein the further network entity (40) comprises a third wireless interface (43) and a fourth wireless interface (44), wherein the method comprises the steps of:
-- establishing a first wireless communication link (11) between the first wireless interface (31) and the third wireless interface (43), and
-- establishing a second wireless communication link (12) between the second wireless interface (32) and the fourth wireless interface (44),
wherein the first wireless communication link (11) uses a licensed radio frequency spectrum, wherein the second wireless communication link (12) uses an unlicensed radio frequency spectrum, and wherein either the first communication link (11) or the second communication link (12) is used for realizing a wireless backhaul communication link between the network entity (30) and the further network entity (40) dependent upon the current network load at the first or further network entity (30, 40) and/or dependent on the Quality-of-Service requirements of a requested communication service.

2. Method according to claim 1, wherein the decision for using either the first communication link (11) or the second communication link (12) is based on configurable rules.

3. Method according to one of the preceding claims, wherein for a specific communication need involving data to be transmitted from the network entity (30) to the further network entity (40), it is decided to use either the first communication link (11) or the second communication link (12).

4. Method according to one of the preceding claims, wherein the data transmitted from the network entity (30) to the further network entity (40) are merged by the further network entity (40).

5. Public land mobile network (10) providing a wireless backhaul communication link between a network entity (30) and a further network entity (40) of the public land mobile network (10), wherein the network entity (30) comprises a first wireless interface (31) and a second wireless interface (32), and wherein the further network entity (40) comprises a third wireless interface (43) and a fourth wireless interface (44), wherein a first wireless communication link (11) is established between the first wireless interface (31) and the third wireless interface (43), and wherein a second wireless communication link (12) is established between the second wireless interface (32) and the fourth wireless interface (44), wherein the first wireless communication link (11) is based on the use of a licensed radio frequency spectrum, wherein the second wireless communication link (12) is based on the use of an unlicensed radio frequency spectrum, and wherein either the first communication link (11) or the second communication link (12) is used for realizing a wireless backhaul communication link between the network entity (30) and the further network entity (40) dependent upon the current network load at the first or further network entity (30, 40) and/or dependent on the Quality-of-Service requirements of a requested communication service.

6. Public land mobile network (10) according to claim 5, wherein the network entity (30) comprises a decision function (35), wherein the decision function (35) is provided such that for a specific communication need involving data to be transmitted from the network entity (30) to the further network entity (40), a decision to use either the first communication link (11) or the second communication link (12) is provided by the decision function (35).

7. Public land mobile network (10) according to claim 5 or 6, wherein the further network entity (40) comprises a merging function (46), wherein the merging function (46) is provided such that the data transmitted from the network entity (30) to the further network entity (40) via the first communication link (11) and via the second communication link (12) are merged by the merging function (46).

8. Network entity (30) providing a wireless backhaul communication link between the network entity (30) and a further network entity (40) of a public land mobile network (10), wherein the network entity (30) comprises a first wireless interface (31) and a second wireless interface (32), and wherein the further network entity (40) comprises a third wireless interface (43) and a fourth wireless interface (44), wherein a first wireless communication link (11) is established between the first wireless interface (31) and the third wireless interface (43), and wherein a second wireless communication link (12) is established between the second wireless interface (32) and the fourth wireless interface (44), wherein the first wireless communication link (11) is based on the use of a licensed radio frequency spectrum, wherein the second wireless communication link (12) is based on the use of an unlicensed radio frequency spectrum, and wherein either the first communication link (11) or the second communication link (12) is used for realizing a wireless backhaul) communication link between the network entity (30) and the further network entity (40) dependent upon the current network load at the first or further network entity (30, 40) and/or dependent on the Quality-of-Service requirements of a requested communication service.

9. Network entity (30) according to claim 8, wherein the network entity (30) comprises a decision function (35), wherein the decision function (35) is provided such that for a specific communication need involving data transmitted from the network entity (30) to the further network entity (40), a decision to use either the first communication link (11) or the second communication link (12) is provided by the decision function (35).

10. Network entity (30) according to claim 8 or 9, wherein the network entity (40) comprises a merging function (36), wherein the merging function (36) is provided such that the data transmitted from the further network entity (40) to the network entity (30) via the first communication link (11) and via the second communication link (12) are merged by the merging function (36).

11. System comprising a network entity (30) and a further network entity (40) and providing a wireless backhaul communication link between the network entity (30) and the further network entity (40), wherein the network entity (30) comprises a first wireless interface (31) and a second wireless interface (32), and wherein the further network entity (40) comprises a third wireless interface (43) and a fourth wireless interface (44), wherein a first wireless communication link (11) is established between the first wireless interface (31) and the third wireless interface (43), and wherein a second wireless communication link (12) is established between the second wireless interface (32) and the fourth wireless interface (44), wherein the first wireless communication link (11) is based on the use of a licensed radio frequency spectrum, wherein the second wireless communication link (12) is based on the use of an unlicensed radio frequency spectrum, and wherein either the first communication link (11) or the second communication link (12) is used for realizing a wireless backhaul communication link between the network entity (30) and the further network entity (40) dependent upon the current network load at the first or further network entity (30, 40) and/or dependent on the Quality-of-Service requirements of a requested communication service.

12. System according to claim 11, wherein the network entity (30) comprises a decision function (35), wherein the decision function (35) is provided such that for a specific communication need involving data to be transmitted from the network entity (30) to the further network entity (40), a decision to use either the first communication link (11) or the second communication link (12) is provided by the decision function (35).

13. System according to claim 11 or 12, wherein the further network entity (40) comprises a merging function (46), wherein the merging function (46) is provided such that the data transmitted from the network entity (30) to the further network entity (40) via the first communication link (11) and via the second communication link (12) are merged by the merging function (46).

14. Program comprising a computer readable program code for executing a method according to one of claims 1 to 4 or for configuring or controlling a public land mobile network (10) according to one of claims 5 to 7 or a network entity (30) according to claims 8 to 10 or a system according to one of claims 11 to 13.
